Europäisches Patentamt

(19) European Patent Office

Office européen des brevets

(11) Publication number: 0 240 936
A2

# (12) EUROPEAN PATENT APPLICATION

(21) Application number: 87104874.0

(22) Date of filing: 02.04.87

(51) Int. Cl.³: F 16 G 5/16

(30) Priority: 05.04.86 JP 78593/86
25.07.86 JP 176385/86

(43) Date of publication of application:
14.10.87 Bulletin 87/42

(84) Designated Contracting States:
DE FR GB IT NL SE

(71) Applicant: Bando Chemical Industries, Ltd.
15-go, 2-ban, 3-chome Meiwa-dori
Hyogo-ku Kobe Hyogo(JP)

(71) Applicant: Asahi Yukizai Kogyo Kabushiki Kaisha
5955-banchi, 2-chome Nakanose-cho Nobeoka
Miyazaki(JP)

(72) Inventor: Nishida, Kenji c/o Bando Chemical
Industries, Ltd. 15-2-3 Meiwa-dori Hyogo-ku
Kobe, Hyogo(JP)

(72) Inventor: Nonaka, Keizo c/o Bando Chemical
Industries, Ltd. 15-2-3 Meiwa-dori Hyogo-ku
Kobe, Hyogo(JP)

(72) Inventor: Matsuoka, Hiroshi
c/o Bando Chemical Ind., Ltd. 15-2-3, Meiwa-dori
Hygogo-ku, Kobe, Hyogo(JP)

(72) Inventor: Idemori, Kenjiro c/o Asahi Yukizai Kogyo
Kabushiki Kaisha 5955-banchi, 2-chome Nakanose-cho
Nobeoka Miyazaki,(JP)

(72) Inventor: Kushima, Yasuhiro c/o Asahi Yukizai Kogyo
Kabushiki Kaisha 5955-banchi, 2-chome Nakanose-cho
Nobeoka Miyazaki,(JP)

(74) Representative: Gauger, Hans-Peter, Dipl.-Ing. et al,
Patentanwälte Dipl.-Ing.Hans-Jürgen Müller
Dipl.-Chem.Dr.Gerhard Schupfner Dipl.-Ing.Hans-Peter
Gauger Lucile-Grahn-Strasse 38
D-8000 München 80(DE)

(54) V Belt.

(57) A V belt which is composed of endless load carriers and a plurality of blocks engaged with said load carriers at a substantially regular pitch and in a lengthwise direction of a belt. Blocks are formed with hard resin material at least at the surface which makes contact with a pulley. Said hard resin material is mixed with organic reinforcing fiber and contains a friction regulating agent. It is desirable that the hard resin material is matrix comprising phenolic resin or phenolic resin and rubber ingredient and contains fibrous base material having tensile strength of more than 6g/denier and strength of more than 12g.

FIG.2

## SPECIFICATION

Title of the invention:                    V Belt

## BACKGROUND OF THE INVENTION

Field of the invention:

This invention relates to a V belt which is used for high load transmission in a dry type transmission. The V belt according to the present invention is usable not only as the V belt of a continuously variable transmission for motor vehicles but also as the V belt of a continuously variable or uncontinuously variable transmisson for vehicles loaded with an engine, such as agricultural machines and civil engineering machines. Also, it is most suitable for the V belt for high load of general industrial machines to be driven by electric motors.

Prior art:

As a transmission for running of a motor vehicle, development of the belt type continuously variable transmission is in progress. This belt type continuously variable transmission comprises two variable-speed pulleys which are variable in the width of groove and fitted to a driving shaft and a driven shaft and a V belt wound round the two variable-speed pulleys. Under this construction, continuous variations of speed are effected by varying the rotation pitch diameter by regulating the width of groove.

These belt type continuously variable transmissions are available in two kinds. One is a wet type transmission using a metallic V belt (Japanese Patent Application Publication Gazette No.55-6783, for example) and the other is a dry type transmission using a rubber V belt (Japanese Utility Model Application Publication Gazette No.32-10408, for examle). In general, variable transmission drive pulleys are composed by metallic materials, such as cast iron, steel, aluminum alloy, etc., and therefore metallic V belts must be used in lubricating oil to prevent overheating at the frictional surface and wear. However, rubber V belts are free from such necessity and therefore are advantageous in the aspects of manufacturing cost and maintenance.

A transmission for running of motor vehicles is required to have ability to transmit very high torque, for example, when the maximum torque of 1,000cc engine is transmitted by a rubber V belt, a V belt must stand the lateral pressure of around 20 kg/$cm^2$.

However, typical rubber V belts in practical use at present are usually used under the condition of less than 4 -5 kg/$cm^2$ and even rubber V belts for high load cannot be used under the condition of more than 10 kg/$cm^2$. This is because the rubber V belt buckles and deforms by high lateral pressure, with the result that it is broken finally by its generation of heat.

(Problem which the present invention tries to solve)

The present applicants previously filed patent applications for a V belt which is composed by engaging an endless load carrier with a plurality of blocks (refer to U.S. Patents No.634,885 and No.903,346) but this type of V belt had such problematical points as (1) during high-speed running of the V belt, frictional force becomes large and the temperature rises high at the part where the load carrier engages with blocks, causing melting or thermal deforming of the V block and resultant shortening of the usable life of V belt, (2) abrasion of the side surface of a V block which makes contact with pulleys is high and accordingly the speed variation ratio fluctuates, (3) for obtaining high transmitting ability , it is required to compose the V block of material of hard quality and for this purpose use of glass fiber as a reinforcing agent is suggested but abrasion at the side surface of a block which makes contact with the pulley causes glass fiber to expose and as a result the pulley is easy to be damaged, and (4) a noise produced by a running V belt increases.

All of the foregoing four problematical points relate to the sliding characteristics of the block, namely, (1) relates to the problem of sliding between the block and the load carrier and (2), (3), (4) relate to the problem of sliding between the block and the pulley.

As the characteristics required for the block, we can enumerate the load-resistance, heat-resistance, shock-resistance, creep-resistance and small specific gravity.

In the case of the V belt of this type, it is an important task to prevent abrasion at the side surface of a block which makes contact with the pulley and with this in view, the present inventors studied the use of plastic material as the material of blocks of this V belt, such as polyamide resin reinforced with glass fiber, phenol resin plastic material containing glass fibrous basic material, etc.

From the above study it has been found that in the case of the block using the former material, it is reinforced with glass fiber but since its matrix is the so-called thermoplastic resin, at the time of high temperature or high-speed running of the V belt the surface of a block which makes contact with the pulley fuses and sliding is caused or creep takes place. Thus, use of the block of the former material under the condition of high temperature, high-speed running or high load is impossible.

On the other hand, in the case of the block using the latter material it dose not involve the trouble of fusing of the surface of a block which makes contact with the pulley but the elongation of material is very samll, though such plastic material is very high in flexural strength, and the material is very low in impact strength (2 - 5 kg.cm/cm). Therefore, the block cannot stand the repeated shock at the belt running and is damaged earlier.

(Disclosure of the invention)

The present invention has been made in consideration of the problematical points of the prior arts and after careful studies. Its object is to provide a V belt which withstands high temperature, high-speed running and running under high load, imparts no damage to the pulley and produces slight noise during running.

In order to attain the above object, the V belt under the present invention comprises endless load carriers and a plurality of blocks which are engaged with said load carriers at a regular pitch in a lengthwise direction of the belt. Said block is formed with hard resin materials, at least at the surface at which it makes contact with the pulley and said hard resin materials are mixed with organic reinforcing fiber and contain a friction regulating agent.

The block mentioned above, at the time of high-speed running of the V belt, has large friction at the part wherer it makes contact with the load carrier and rises partially in temperature. Therefore, if the block is made of thermoplastic resin, it fuses or deforms by heat and accordingly the usable life of the V belt is short. With this in view, it is desirable to select as a material base of the block thermosetting resin which has high heat-resistance and which does not cause deformation of the block, even if it carbonizes partially at a high temperature. It goes without saying that use of thermoplastic resin as the material base is possible in the case where load on the V belt is small.

Since thermosetting resin is generally inferior in shock-resistance, it is required to transform its quality by compounding, for which use of phenol resin which is high in the degree of freedom is desirable from the aspect of compounding. As is well known, blending of NBR with phenol resin improves shock-resistance and in the present invention it is better to mix phenol resin 95 - 60 weight parts with NBR 5- 40 weight parts.

For obtaining high transmitting abilitiy, it is required to compose the block with resin of hard quality. In general, high rigidity can be obtained by reinforcing with inorganic fiber, such as asbest, glass fiber, etc. but use of such inorganic fiber is undesirable from the aspects of damage on the pulley and weight of the block. In the present invention, organic fiber, such as nylon, polyester, aramid, vinylon, etc., is used, instead of inorganic fiber, to obtain the material of high rigidity. Among such organic fibers, aramid fiber shows superiority in the improvement of load-resistance and creep-resistance. For improving abrasion-resistance, isodirectional contractibility and plasticity, calcium carbonate, silica, talc, clay, wollastnite, potassium titanate, carbon whisker or the like is used, where necessary. Reinforcing fiber is not limited to organic fiber but inorganic fiber may be used in combination with organic fiber, so long as it does not raise the problem of damage on the pulley.

As to the organic fiber, such organic fiber which does not melt by heat generated by friction between the pulley and the block and has high abrasion-resistance and reinforcing property is better. In this respect, aramid fiber is the best but use of aramid fiber in combination with other organic fiber is allowable. After fiber is subjected to an adhesion treatment, it is added to matrix. Fiber is generally composed of short staples cut in several m.m. - several tens m.m. but may be composed of long staples of cloth-like shape, bundle-like shape, cord-like shape, etc.

For reducing noise produced by a running V belt, a friction regulating agent, such as polytetrafluoroethylene, graphite, molybdenum disulfide, carbon fiber, carbon whisker, etc., is used. This agent is compounded at the ratio of matrix (phenol resin/NBR) 100 weight parts to the agent 1 - 15 weight parts. One weight part of the agent is the quantity necessary for imparting the minimum effect but addition of more than 15 weight parts will result in reducing the strength, coefficient of friction and transmitting ability of the V belt and in increasing the cost of materials.

Regarding the friction regulating agent, such agent which reduces the coefficient of static friction between the pulley material (metal, in general) and the block but does not reduce the coefficient of kinetic friction much is ideal for improving the transmitting ability of the V belt and reducing a noise. After examination of various kinds of friction regulating agent, it was found that polytetrafluoroethylene powder is most effective as a friction regulating agent having such effect.

The V belt according to the present invention is composed of an endless load carrier and a plurality of blocks arranged at a substantially regular pitch in a lengthwise direction of the belt and is characterized in that at least the part of said block which makes contact with the pulley is formed of 100 weight parts of martrix (phenolic resin 100 weight parts and rubber ingredient 3 - 70 weight parts) and 10 - 125 weight parts of fibrous basic material having tensile strength of more than 6g/denier and strength of more than 12g.

With regard to the block, those parts of the block which do not make contact with the pulley may be made of rubber, thermoplastic or thermosetting resin or such rubber or resin mixed with a compound material, such as reinforcing fiber, or may be made of phenolic resin plastic material which forms the part of the block which makes contact with the pulley. For reinforcing purposes, material of high rigidity and high tenacity, such as metal, FRP, etc., may be molded inside the block (so-called insert molding).

An explanation is made below about the contents of phenolic resin plastic material which forms at least the surface of a block which makes contact with the pulley.

As the phenolic resin to be used in the present invention, we can enumerate novolak of denatured type or non-denatured type, phenol resin of resol type or benzilic ether type, etc. As the denatured phenol resin, there are available alkyl denatured phenol resin, tolu oil denatured phenol resin, etc. but more suitable one is a phenol resin denatured by at least a kind of chemical compound selected from cardol contained in cashew oil, anacardic acid and cardonal (hereinafter referred to as cardol and the like). As this resin has strong adhesive strength and high compatibility, it forms a firmly bonded micro sea island structure in its blending withrubber ingredient and therefore imparts plastic material which has impact strength and flexural strength well-balanced at a high value.

When effecting denaturation by using the above-mentioned cardol singly or by using jointly cardol and others, such additive should be used at the ratio of 100 weight parts of phenol group (phenol, cresol, resorcin, etc.) to 10 - 100 weight parts (preferably, 15 -70 weight parts) of it. Use of the additive in less than 10 weight parts is not desirable because it results in decreasing compatibility with rubber ingredient, with resultant reduction in flexural strength and impact strength of the plastic material. On the other hand, use of the additive in excess of 100 weight parts results in reducing flexural strength and heat-resistance.

The denatured and non-denatured phenolic resin described above can be used singly or in mixture of two or more kinds. When using jointly non-denatured phenol resin and phenol resin denatured by cardol and the like, the mixing rate of both should be determined in consideration of compatibility with rubber ingredient.

Rubber ingredient which forms matrix with the above-mentioned phenolic resin should be compounded at the ratio of 100 weigh parts of phenolic resin to 3 - 70 weight parts (preferably, 5 - 50 weight parts) of it. If the compounding rate of rubber ingredient is less than 3 weight parts, plastic material to be obtained is not satisfactory in impact strength. On the other hand, if it exceeds 70 weight parts, flexural strength is reduced to a large degree and creep-resistance at high temperatures is worsened.

Regarding the rubber ingredient, such rubber which has comparatively high polarity is best, for example, vulcanized or non-vulcanized acrylonitrilebutadiene rubber (NBR), carboxyl denatured acrylonitrilebutadiene rubber (C-NBR), chloroprene rubber (CR), acrylic rubber, chlorinated rubber, etc. These can be used singly or in combination. This ingredient can be bridged at the process of mix kneading or setting by adding a vulcanizing agent, such as sulphur, peroxide, resin vulcanizing agent, etc., vulcanizing accelerator and vulcanizing assistant. Phenol resin molding with rubber ingredient bridged has such feature that it can safely be used under the heating environment.

Among various rubber ingredients, carboxyl denatured acrylonitrilebutadiene rubber (C-NBR) is especially superior in compatibility with phenol resin and therefore rubber is dispersed uniformly in phenol resin and high strength is imparted. By using C-NBR, it is made possible to increase the rate of use of non-denatured phenol resin, in the case of combined use of phenol resin and non-denatured phenol resin. Also, it is possible to use non-denatured phenol resin singly.

Fibrous base materials to be used in the present invention are fibers comprising an organic matter having tensile strength of more than 6g/denier and strength of more than 12g (preferably, more than 30g), twisted yarn, chip-like cloth or cloth made of such fibers. These may be used singly or in combination. In the case of material which does not meet the above requirement, for example, rayon chopped strand (hereinafter referred to as rayon chop) having strength of more than 12g but tensile strength of 2 - 3g/denier, is not satisfactory in impact strength and flexural strength. On the other hand, fibrous base material having tensile strength of less than 6g/denier and strength of less than 12g is low both in impact strength and flexural strength. The object of the present invention cannot be attained by the use of these materials.

From the above, it can be seen that an indispensable condition of fibrous base material which reinforces rubber phenolic resin matrix is neither Young's modulus nor tensile strength in itself but is to meet requirements of both tensile strength and strength. This is apparent from the fact that in the case where fibers having the same tensile strength are used for resin in the same weight parts, those which are made larger in diameter and stronger in strength show much inprovement on impact strength and from the fact that cotton chips having high strength but low tensile strength, for example, show only slight improvement on impact strength.

The tensile strength herein mentioned is strength to the fixed denier and is expressed by load per unit area. The unit is expressed by g/denier of single fiber, common to fiber, twisted yarn, chip-like cloth and cloth. The strength is a strength of fiber itself, irrespective of denier, and is a load to be obtained by multiplying the tensile strength by its denier. The unit is expressed by g.

The compounding rate of the above-mentioned fibrous base materials which compose phenolic resin plastic material is selected from the range of 100 weight parts of matrix (comprising phenolic resin and rubber ingredient) and 10 - 125 weight parts (preferably 20 - 80 weight parts) of the fibrous base materials. If the compounding rate is less than 10 weight parts, improvement on impact strength and flexural strength is slight and if it exceeds 125 weight parts, molding becomes difficult.

As the fibrous base material, cellulosic fibers, such as polyvinyl alcohol fiber (hereinafter referred to as vinylon fiber), polyamid fiber (hereinafter referred to as nylon fiber), rayon fiber, ramie, flax, hemp, etc., and organic fibers,such as polyester fiber, aramid fiber, etc., are suitable. These fibers may be used singly or in combination of two or more kinds. In the case where inorganic fiber, such as carbon fiber, glass fiber, metallic fiber, mineral fiber, etc., is used as fibrous base material, it is preferable to use it in combination with the above-mentioned organic fiber. This is because if such inorganic fibers are used singly, it raises such problems as damage on the pulley surface, generation of big centrifugal force due to large specific gravity, generation of big frictional sounds due to excessively high coefficient of friction with the pulley surface, etc. In using inorganic fibers in combination with organic fibers, it is recommended to use inorganic fibers at the rate of less than 70% in weight of total fibers (preferably, less than 50% in weight). Among various kinds of fiber mentioned above, rayon fiber, flax, hemp and aramid fiber or carbon fiber and glass fiber which are used in combination show slight temperature dependency of the coefficient of elasticity even at a high temperature and phenolic resin plastic material to be obtained by compounding fibrous base material comprising such fibers show slight reduction in physical property (such as flexural strength) even at a high temperature. Thus, this phenolic resin plastic material can safely be used under a heating environment.

Also, it has been found that by using Technora (aramid fiber made by Teijin, polyparaphenylene 3, 4 diphenylether terephtharamid) singly or in mixture with other organic fiber or inorganic fiber, shock-resistance is improved even if rubber ingredient is compounded in a less quantity. This is because Technora has high strength and is not broken easily in processing.

Glass fiber is subjected to a surface treatment with a silane coupling agent. Since aramid fiber, polyester fiber, carbon fiber, etc. have poor reactivity to resin, these fibers are first subjected to a pretreatment and then subjected to a surface treatment with resorcinol resin, resol type phenol resin, epoxi resin or the like. The fibrous base material is used in the form of fiber, twisted yarn, chip-like cloth and cloth and its staple length is not particularly limited but staple length of 1 - 10m.m. is preferable. Twisted yarn, chip-like cloth ant cloth can be used as they are but it is preferable to use them after they were hardened with an adhesive.

In the case where the V belt is used for the continuously variable transmission for motor vehicles, for which a low noise is specially required, addition of a friction regulating agent will make it possible to reduce a noise.

As to the friction regulating agent to be used for reducing a noise, we can enumerate fluoric resin, such as polytetrafluoroethylene, perfluoroalkoxytetrafluoroethylene, etc., graphite, molybdenum bisulfide, carbon whisker, etc. as proper friction regulating agents. These are used generally in powder form. The compounding rate to phenolic resin plastic material should be selected from the range of 1 - 15% in weight, preferably 2 - 10% in weight, of total compounding. If the compounding rate is less than 1% in weight, even the minimum effect cannot be obtained and if it exceeds 15% in weight, strength of the block is lowered and the coefficient of friction is lowered excessively, with the result of reducing the transmitting ability of the V belt. It is considered that addition of these friction regulating agents reduces the coefficient of friction of the block to the pulley material, with the result that movement of the block inside the pulley becomes smooth and a frictional sound is reduced.

The phenolic resin plastic material in the present invention can be manufactured by the conventional method. For example, phenol resin denatured with at least one of cardol, anacardic acid and cardanol is compounded with a hardening agent and rubber ingredient, where necessary, so that rubber ingredient ratio may be 3 - 7% in weight. This matrix is compounded with fibrous base material having tensile strength of at least 6g/denier and strength of at least 12g, at the ratio of matrix 100% weight parts to fibrous base material 10 - 125 weight parts. Where necessary, inorganic pulverulent body such as calcium carbonate, curing catalyst, mold releasing agent, coloring agent, etc. are added in proper quantities to matrix and, after uniform dispersing mixing by a Henshel mixer or the like, such mixture is mix kneaded by a heating roller and is made into a sheet. The sheet material thus made is crushed, pulverized or granulated into phenolic resin plastic material.

Regarding the method of forming phenolic resin plastic material, there is no particular limitation on it and one of the conventional methods can be adopted.

For bridging rubber ingredient, a bridging agent and a bridge accelerator in proper quantities are added to non-vulcanized rubber and, after mix kneading by a roller, are compounded to phenolic resin material.

The phenolic resin plastic material thus made is composed of rigid phenolic resin, non-vulcanized rubber or partially vulcanized rubber and fibrous base material having high tensile strength and high strength, all of which are uniformly dispersed and coupled by strong adhesive strength.

An explanation is made below about the adhesive strength referred to above. In the case where adhesive strength is weak, even if the degree of fiber reinforcement is raised, flexural strength is reduced, though impact strength improves, and even if impact strength is raised by increasing rubber ingredient (non-vulcanized rubber or partially vulcanized rubber), flexural strength is reduced exceedingly. From this fact, it has been found that it is an indispensable condition to raise adhesive strength between rubber ingredient and phenolic resin.

An explanation is made below about the strong adhesive strength between fibrous base material and the phenolic resin. Some of and most of vinylon fiber, nylon fiber, rayon fiber, hemp, etc. react to the phenolic resin at their surfaces during the mix kneading process and during forming process respectively and both are coupled by strong chemical bond. However, in the case of glass fiber, polyester fiber, aramid fiber, carbon fiber, etc., the object of the present invention can be displayed only when glass fiber was coupled with phenolic resin with strong adhesive strength by a silane coupling agent treatment and only when polyester fiber, aramid fiber, carbon fiber, etc. were first subjected to a pretreatment and then subjected to a surface treatment with the adhesive agent. From this fact, it has been found that it is also an indispensable condition that fibrous base material is coupled with the phenolic resin by strong adhesive strength. Thie strong bonding strength between fibrous base material and phenolic resin is effective for increasing the repeated impact strength.

From the above, it can be said that the block for V belt under the present invention is improved in impact strength, flexural strength and repeated impact strength. Referring especially to the impact-resistance, impact strength is raised by using Technora singly or in mixture with other organic fiber or inorganic fiber, even in the case where rubber ingredient is small in quantity. This is because Technora has high strength and does not break easily in processing.

Fibrous base material comprising rayon fiber, hemp, surface-treated aramid fiber, carbon fiber or glass fiber and partially vulcanized rubber are small in temperature dependency of the coefficient of elasticity even at a high temperature and are effective for controlling the lowering of physical property at a high temperature, such as flexural strength, coefficient of flexural elasticity, etc.

By using twisted yarn, chip-like cloth and cloth hardened with adhesives, twisted yarn, chip-like cloth and cloth are prevented from getting loose during the manufacturing of material. Moreover, tensile strength and strength of these in weft and warp direction are improved.

The foregoing and other objects of the present invention and novel features of the present invention will be understood more clearly by reading the following detailed description with reference to the accompanying drawings.

## BRIEF DESCRIPTION OF THE DRAWINGS

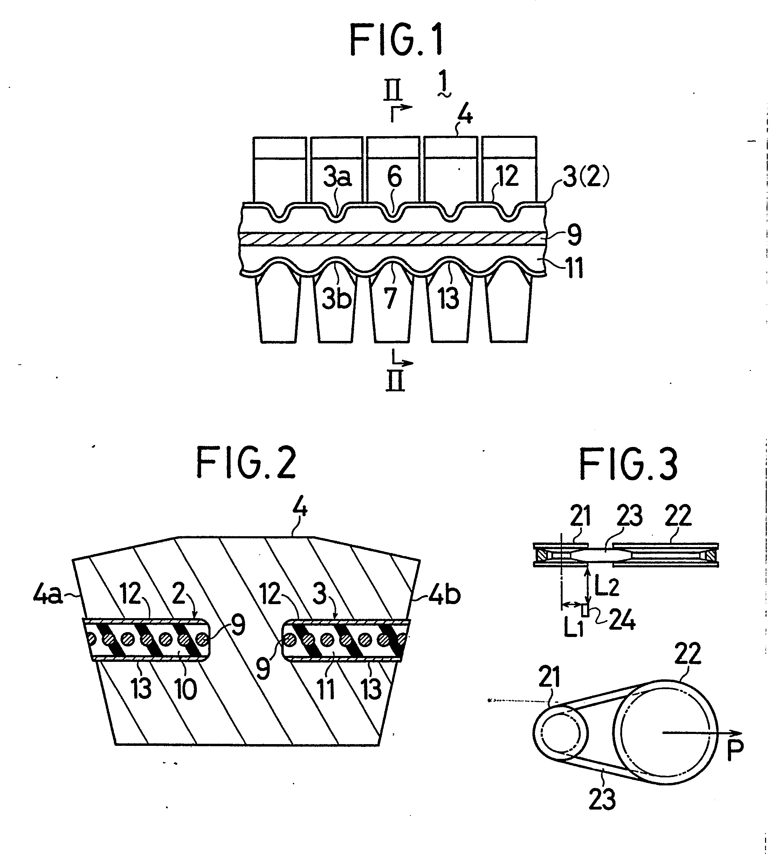

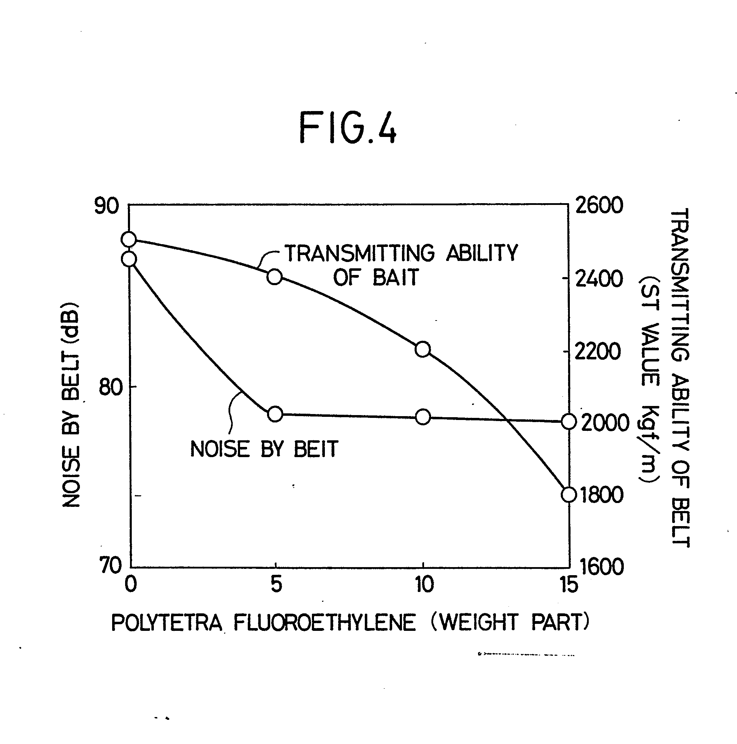

The accompanying drawings show a preferred embodiment of the present invention. In the drawings, Fig. 1 is a side view of the V belt according to the present invention; Fig. 2 is a cross section, taken along the line II - II in Fig. 1; Fig. 3 is an explanatory drawing of the testing method; and Fig. 4 - Fig. 6 are explanatory drawings of the test results.

The embodiment of the present invention is described below with reference to the drawings.

As shown in Fig. 1 and Fig. 2, a V belt 1 according to the present invention is composed of a pair of endless load carriers 2, 3 and a plurality of blocks 4 engaged with the load carriers 2, 3 at a regular pitch in a lengthwise direction of the load carriers.

Each block 4 has at its both sides engaging grooves opened at both side surfaces 4a, 4b. Formed at the upper surface and the under surface of each engaging groove are a convexed part 6 and a curved convexed surface 7 respectively.

The load carriers 2, 3 comprise tensile members 9, 9 made by subjecting organic fiber, such as polyester, aramid, etc., or inorganic fiber, such as steel fiber, glass fiber, carbon fiber, etc., to a twisted yarn adhesion treatment, rubber members 10, 11 to hold the tensile members 9, 9 and woven fabrics 12, 12 and 13, 13 composed of organic fiber, such as 6, 6 nylon, aramid, etc., having excellent abrasion-resistance and embedded close to the upper surface and the under surface. Provided at the upper surface and the under surface of the load carriers 2, 3 are concaved parts (only concaved parts 3a, 3b of the load carrier 3 are shown in the drawing) to engage with the convexed part 6 and the curved convexed surface 7 provided at the engaging groove of each block.

The compounding of Examples B - F of the present invention and Comparative Example A containing no friction regulating agent is shown in Tabel 1 and characteristics of each example are shown in Table 2.

Table 1

|  | A | B | C | D | E | F |
|---|---|---|---|---|---|---|
| Phenol resin | 40 | 40 | 40 | 40 | 40 | 40 |
| NBR | 25 | 25 | 25 | 25 | 25 | 25 |
| Technora | 25 | 25 | 25 | 25 | 25 | 25 |
| Calcium carbonate | 10 | 10 | 10 | 10 | 10 | 10 |
| Polytetrafluoroethylene powder |  | 5 | 10 | 15 |  |  |
| Graphite powder  - |  |  |  |  | 10 |  |
| Molybdenum bisulfide powder |  |  |  |  |  | 10 |

Unit: Weight part

Technora: Aramid fiber manufactured by Kabushiki Kaisha Teijin

Table 2

|  | A | B | C | D | E | F |
|---|---|---|---|---|---|---|
| Flexural strength (kgf/mm$^2$) | 9.3 | 9.1 | 9.1 | 8.0 | 9.2 | 9.0 |
| Coefficient of flexural elasticity (kgf/mm$^2$) | 396 | 386 | 372 | 348 | 397 | 390 |
| Coefficient of kinetic elasticity E' <br> E'25 (at 25℃, ×10$^{10}$dyne/cm$^2$) <br> E'100 (at 100℃, ×10$^{10}$dyne/cm$^2$) <br> E'100 / E'25 (%) | 3.74 <br> 3.07 <br> 82.1 | 3.69 <br> 3.01 <br> 81.6 | 3.66 <br> 2.94 <br> 80.3 | 3.45 <br> 2.64 <br> 76.5 | 3.72 <br> 3.05 <br> 82.0 | 3.71 <br> 3.03 <br> 81.7 |
| Coefficient of static friction (inclination method) | 0.34 | 0.12 | 0.09 | 0.09 | 0.23 | 0.22 |
| Coefficient of kinetic friction (Suzuki method) <br> (P = 20 Kgf/cm$^2$, ) <br> (V = 0.1cm/sec, at 80℃) | 0.39 | 0.29 | 0.24 | 0.20 | 0.30 | 0.28 |

It can be seen from the above Table 1 and Table 2 that polytetrafluoroethylene shows the largest coefficient of friction reducing effect and that the coefficient of static friction is larger in the degree of reduction than the coefficient of kinetic friction. This suggests that a sound generated by sliding between the block and the pulley can be reduced, without decreasing the transmitting ability too much. Addition of polytetrafluoroethylene tends to reduce strength and coefficient of elasticity but increase thermo-sensitivity. Since the coefficient of friction reducing effect of polytetrafluoroethylene is almost saturated if 10 weight parts or more is added, addition of less than 10 weight parts is preferable.

If the coefficient of static friction is small, resistance of the block when it begins to move on the pulley becomes small and therefore the block moves smoothly on the pulley, whereby a sound of frictional sliding between the block and the pulley becomes small. On the other hand, the coefficient of kinetic friction controls sliding resistivity at the time when relative movement between the block and the pulley is generated and in the frictional transmission, sliding resistance of a certain degree is necessary. The friction regulating agent is compounded so as to control such coefficient of static friction and coefficient of kinetic friction.

A noise test, a transmitting ability test and an abrasion test were carried out on the belt comprising the block formed with resin material shown in Table 1.

(1) Measurement of V belt

Thickness of block (4.8mm) Fitting pitch (5.0mm) Upper width (45mm)  Angle 26° Circumferential length of V belt  750mm (150 blocks) The block has a reinforcing member comprising aluminum alloy of 2mm in thickness as insert formation.

(2) Testing method

As shown in Fig. 3, a sample belt 23 was wound round between the driving pulley 21 (pitch diameter 72.2mm, number of revolutions 2,500r.p.m.) and a driven pulley 22 (pitch diameter 152.5mm) and the driven pulley 22 was run in the state that it was given a load P=200 Kg in a direction contrary to the driving pulley 21. The level of noise was measured by a noise meter 24 at the fixed position ($L_1$ = 50mm, $L_2$ = 100mm).

Table 3

|  | A | B | C | D | E | F |
|---|---|---|---|---|---|---|
| Belt noise (dB) at 80°C (Driving pulley 1000rpm) (Axial load 100kgf) | 86.0 | 78.5 | 78.3 | 78.1 | 84.8 | 84.0 |
| Transmitting ability of belt ST value (Kgf/m) Rate of slip 2% | 2500 | 2400 | 2200 | 1800 | 2400 | 2300 |
| Abrasion of block (Thickness of abrasion of block after high-speed edurance running) | 1.16 | 0.39 | 0.30 | 0.33 | — | — |

ST value by which the transmitting ability of V belt is evaluated was calculated by the following formula.

$$ST = T/r \cdot r$$

T: Input torque (Kg m)

θ: Belt winding round angle (radian)

r: Effective radius (m)

(3) Test results

The test results are as shown in Table 3.

As indicated by the noise data, among friction regulating agents polytetrafluoroethylene showns the largest V belt noise reducing effect.

Effect of polytetrafluoroethylene addition is revealed satisfactorily by adding about 5 parts of polytetrafluoroethylene to 100 parts of matrix (phenol resin/NBR). However, the transmitting ability of belt decreases gradually with the increase of polytetrafluoroethylene.

Therefore, the quantity of polytetrafluoroethylene to be added should preferably be 2 - 10 parts to 100 parts of matrix. Fig. 4 shows the effect of addition of polytetraflouroethylene on the noise and transmitting ability of V belt. From the data of abrasion of the block, it can be seen that addition of polytetrafluoroethylene improves abrasion-resistance of the block. Both molybdenum disulfide and graphite are effective, to some extent, for reducing the coefficient of static friction and reduces the noise level to some extent. On the other hand, polytetrafluoroethylene powder reduces the coefficient of kinetic friction to some extent but reduces the coefficient of static friction to a large extent. Thus, as compared with other friction regulating agents, polytetrafluoroethylene shows very large noise reducing effect under the same transmitting ability.

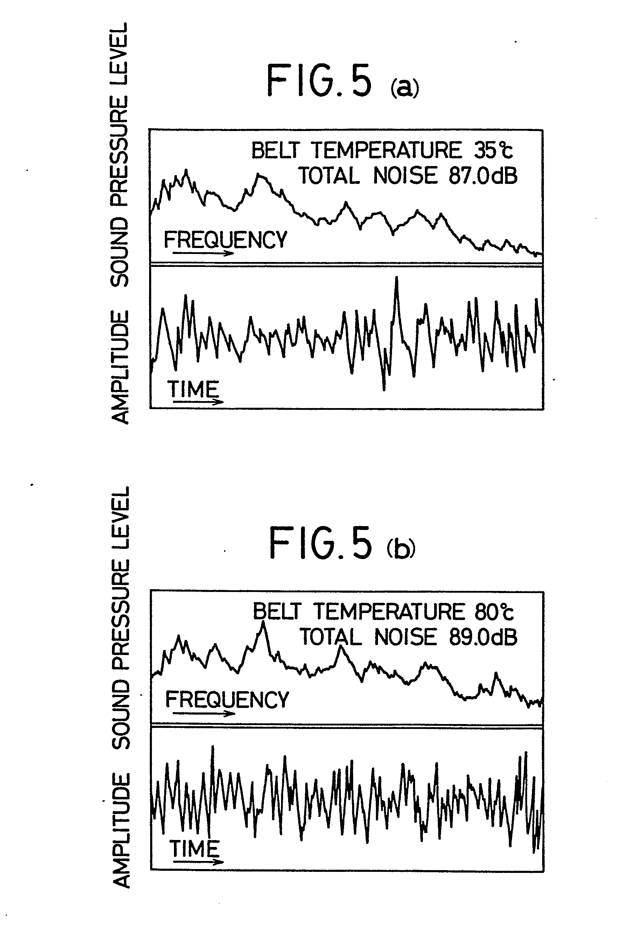

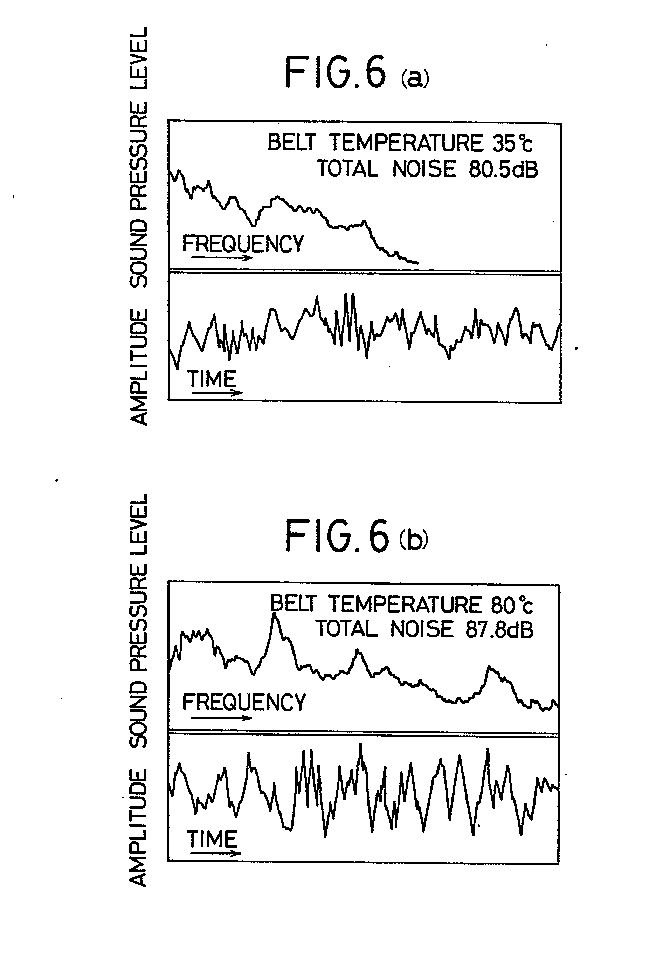

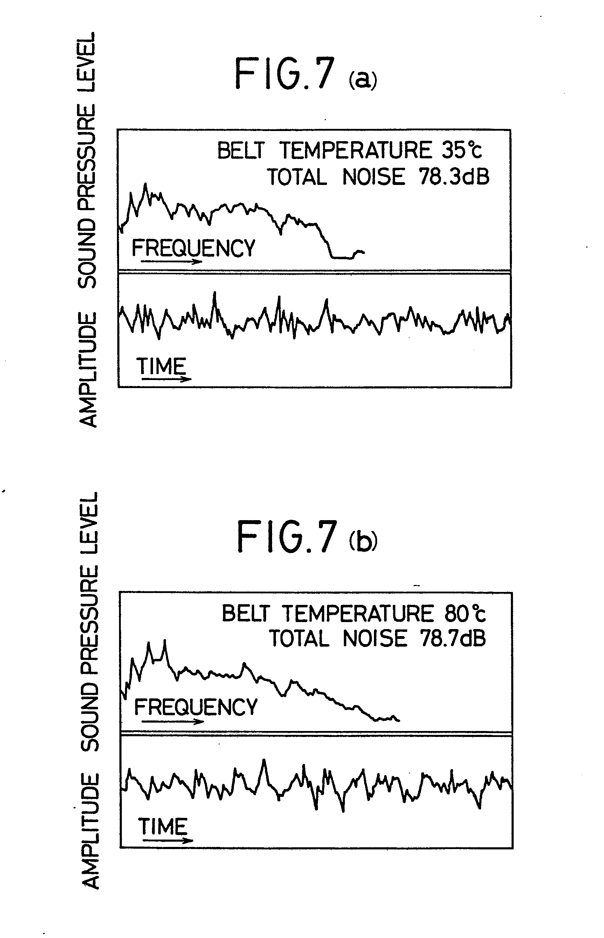

Fig. 5 - Fig. 7 show the original waveform of belt running sound and the result of frequency analysis. Fig. 5 (a) and (b) show those of Example A in Table 1, with Technora replaced with vinylon. Fig. 6 (a) and (b) show those of Example C of the present invention in Table 1, with Technora replaced with vinylon (phenol resin/NBR/vinylon/polytetrafluoro-ethylene). Fig. 7 (a) and (b) show those of Example C of the present invention in Table 1.

Addition of polytetrafluoroethylene simplifies the original waveform and reduces the level of sound pressure in a high frequency area where frictional noises are considered to be dominant. When the belt tempera-

ture rises, the original waveform is disturbed and the sound pressure level of high frequency becomes large, even if polytetrafluoroethylene is added to vinylon group, but only a slight change is observed in the case of Technora group. This is because Technora group is a material of small thermo-sensitivity and its friction characteristic and other physical characteristics are not changed too much. Also, as Technora group is a material of high rigidity and high strength, in imparting high transmitting ability it does not damage the pulley and the load carrier as in the case of glass fiber. Moreover, since Technora group has small specific gravity, it is useful for manufacturing belts of light weight.

An explanation is made on an example of the method of producing denatured phenol resin.

| | |
|---|---|
| Phenol | 100 weight parts |
| 92% paraformaldehyde | 87 weight parts |
| Cashew oil (Cardalite made by Itoh Seiyu) | 40 weight parts |
| Oxalic acid | 0.5 weight parts |

All of the above materials were put in a four-mouthed flask equipped with a thermometer, a stirrer and a condenser and were heated up to 120°C for complete dissolution. Then, condensation reaction was carried out on the contents for 3 hours at 100°C under the reflux condition. After the contents were heated up to 200°C under normal pressure and were dehydrated, they were taken out of the flask and cooled down. In this way, cashew denatured phenol resin was obtained. The resin thus obtained showed the softening point of 60°C, flow at hexa 10% of 67mm/125°C and gel time of 40

seconds/150℃. This resin is referred to as resin A.

(Example 1)

| | |
|---|---|
| Denatured phenol resin (resin A) | 67 weight parts |
| Hexamethylenetetramine | 10 weight parts |
| NBR (Nippol 1041 made by Nippon Zeon) | 23 weight parts |
| Calcium carbonate | 15 weight parts |
| Vinylon chop (tensile strength 11g/denier, strength 33g, staple length 6mm) | 38 weight parts |

The above compound, together with a solvent of the proper quantity, were uniformly dispersed and mixed up by a Henshel mixer, mix-kneaded for 4 - 5 minutes on a heating roller (95℃/85℃) into a sheet form and taken out. This sheet material was cut into a proper size and thus a formable phenol resin plastic material was obtained. The transfer formation was carried out on this plastic material by the conventional method. Test pieces and blocks for the above tests were made with such formed plastic material and measuring of physical properties and a performance test were carried out.

(Examples 2 -14)

Similarly to Example 1, plastic materials were produced at the compounding rates shown in Table 4 and measuring of physical properties and performance tests were carried out.

Technora which was surface-treated with epoxi resin was used.

Results of measuring of physical properties and performance tests were as shown in Table 5.

(Comparative Examples 1 - 4)

Comparative examples in relation to Examples of the present invention were as shown in Table 6. Regarding aromatic polyamide resin reinforced with glass fiber (Reny 1022 made by Mitsubishi Gasu) of Comparative Example 4, blocks were formed by the conventional injection molding, using an injection molding machine for thermoplastic resin. Glass fiber surface-treated with a silane coupling agent was used.

Table 4          Weight part

| Compounding \ No. | Example 1 | Example 2 | Example 3 | Example 4 | Example 5 | Example 6 |
|---|---|---|---|---|---|---|
| Denatured phenol resin (resin A) | 67 | 35 | | 78 | 52 | 67 |
| Novolak type phenol resin | | 32 | 74.5 | | | |
| Hexamethylenetetramine | 10 | 10 | 11.1 | 12 | 8 | 10 |
| NBR (Nippol 1041 made by Nippon Zeon) | 23 | | | 10 | 40 | 23 |
| C-NBR (Nippol 10721 made by Nippon Zeon) | | 23 | 14.4 | | | |
| Calcium Carbonate | 15 | 15 | 15 | 15 | 15 | |
| Calcium Stearate | 2 | 2 | 2 | 2 | 2 | 2 |
| Glass chop (11g/d, 33g, 3mm) | | | | | | |
| Vinylon chop (7.8g/d, 46.8g, 6mm) | 38 | 38 | 38 | 38 | 38 | 38 |
| Technora (25g/d, 37g, 3mm) | | | | | | |
| Keblah 49 (22.3g/d, 33g, 3mm) | | | | | | |
| Rayon chop (6.4g/d, 13.4g, 3mm) | | | | | | |
| Molybdenum disulfide | | | | | | 15 |
| Graphite powder | | | | | | |
| Polytetrafluoroethylene | | | | | | |

0240936

Table: Table 4 (continued)

| Compounding \ No. | Example 7 | Example 8 | Example 9 | Example 10 | Example 11 | Example 12 | Example 13 | Example 14 |
|---|---|---|---|---|---|---|---|---|
| Denatured phenol resin (resin A) | 67 | 67 | 67 | 67 | 67 | 78 | 78 | 78 |
| Novolak type phenol resin | | | | | | | | |
| Hexamethylenetetramine | 10 | 10 | 10 | 10 | 10 | 12 | 12 | 12 |
| NBR (Nippol 1041 made by Nippon Zeon) | 23 | 23 | 23 | | 23 | 10 | 10 | 10 |
| C-NBR (Nippol 10721 made by Nippon Zeon) | | | | 13 | | | | |
| Calcium Carbonate | | 7.5 | 7.5 | 25 | 15 | 7.5 | 7.5 | 7.5 |
| Calcium Stearate | 2 | 2 | 2 | 2 | 2 | 2 | 2 | 2 |
| Glass chop (11g/d, 33g, 3mm) | | | | 15 | | 9 | 9 | |
| Vinylon chop (7.8g/d, 46.8g, 6mm) | 38 | 38 | | 30 | | | | |
| Technora (25g/d, 37g, 3mm) | | | 38 | | 15 | | 33 | 38 |
| Keblah 49 (22.3g/d, 33g, 3mm) | | | | | | 33 | | |
| Rayon chop (6.4g/d, 13.4g, 3mm) | | | | | 25 | | | |
| Molybdenum disulfide | | | | | | | | |
| Graphite powder | 15 | | | | | 15 | 15 | 15 |
| Polytetrafluoroethylene | | 7.5 | 7.5 | | | | | |

Weight part

## Table 5

| No.<br>Performance | Example 1 | Example 2 | Example 3 | Example 4 | Example 5 | Example 6 |
|---|---|---|---|---|---|---|
| Izod with notch impact strength (kg·cm/cm) | 12.7 | 13.1 | 13.2 | 8.4 | 22.6 | 10.6 |
| Flexural strength 25℃ (kgf/mm²) | 11.3 | 12.0 | 12.2 | 11.5 | 9.2 | 10.3 |
| Flexural strength 100℃ (kgf/mm²) | 7.9 | 8.3 | 8.6 | 8.9 | 5.1 | 7.7 |
| Coefficient of flexural elasticity 25℃ (kgf/mm²) | 258 | 266 | 269 | 278 | 237 | 254 |
| Coefficient of flexural elasticity 100℃ (kgf/mm²) | 128 | 136 | 138 | 142 | 105 | 124 |
| Coefficient of friction to SS41 | 0.58 | 0.59 | 0.59 | 0.55 | 0.61 | 0.53 |
| Belt characteristics — Transmitting ability of belt (kg/m) | 2121 | 2125 | 2127 | 2203 | 2034 | 2129 |
| Durability of belt (hour) Condition A | 100< | 100< | 100< | 100< | 100< | 100< |
| Condition B | several hours | ← | ← | ← | ← | ← |
| Noise of belt (dB) at 80℃ | 86.4 | 86.6 | 86.6 | 88.6 | 86.0 | 84.8 |

Table 5 (continued)

| No. / Performance | Example 7 | Example 8 | Example 9 | Example 10 | Example 11 | Example 12 | Example 13 | Example 14 |
|---|---|---|---|---|---|---|---|---|
| Izod with notch impact strength (kg·cm/cm) | 10.4 | 10.3 | 14.6 | 9.3 | 12.1 | 8.4 | 14.3 | 14.4 |
| Flexural strength 25°C (kgf/mm²) | 10.1 | 10.7 | 12.9 | 13.3 | 10.1 | 12.5 | 13.3 | 12.8 |
| Flexural strength 100°C (kgf/mm²) | 7.1 | 7.4 | 10.3 | 10.9 | 7.1 | 11.5 | 11.9 | 10.8 |
| Coefficient of flexural elasticity 25°C (kgf/mm²) | 253 | 250 | 283 | 302 | 268 | 324 | 354 | 311 |
| Coefficient of flexural elasticity 100°C (kgf/mm²) | 123 | 126 | 225 | 243 | 121 | 262 | 275 | 257 |
| Coefficient of friction to SS41 | 0.54 | 0.44 | 0.42 | 0.63 | 0.56 | 0.58 | 0.56 | 0.43 |
| Belt characteristics — Transmitting ability of belt (kg/m) | 2137 | 2030 | 2000 | 2387 | 2150 | 2146 | 2203 | 2070 |
| Belt characteristics — Durability of belt (hour) Condition A | 100< | 100< | 100< | 100< | 100< | 100< | 100< | 100< |
| Belt characteristics — Condition B | several hours | ← | 27 | 22 | several hours | 72 | 96 | 56 |
| Belt characteristics — Noise of belt (dB) at 80°C | 84.0 | 78.1 | 78.0 | 90.0 | 85.8 | 79.5 | 79.2 | 77.0 |

Table 6

| Compounding and performance / No. | Comparative example 1 | Comparative example 2 | Comparative example 3 | Comparative example 4 |
|---|---|---|---|---|
| Denatured phenol resin | | 86 | | Aromatic polya- |
| Novolak type phenol resin | 67 | | 86 | mide resin |
| Hexanethylenetetramine | 10 | 14 | 14 | reinforced with |
| NBR | 23 | | | glass fiber Leny |
| Calcium carbonate | 15 | 15 | | 1022 made by |
| Calcium stearate | 2 | 2 | 2 | Mithubishi Gasu |
| Glass chop | | | 120 | Glass fiber |
| Vinylon chop | 38 | 38 | | 50% |
| Izod with notch impart strength (kg·cm/cm) | 7.3 | 6.5 | 3.1 | 10.6 |
| Flexural strength 25℃ (kgf/mm$^2$) | 6.6 | 9.3 | 19.0 | 23.0 |
| Flexural strength 100℃ (kgf/mm$^2$) | 4.2 | 7.7 | 16.7 | 12 |
| Coefficient of flexural elasticity 25℃ (kgf/mm$^2$) | 217 | 321 | 1850 | 1770 |
| Coefficient of flexural elasticity 100℃ (kgf/mm$^2$) | 94 | 139 | 1600 | 830 |
| Coefficient of friction to SS41 | 0.60 | 0.58 | 0.68 | 0.62 |
| Belt characteristics — Transmitting ability of belt (kg/m) | 2110 | 2200 | 2350 | 2100 |
| Belt characteristics — Durability of belt (hr.) | Blocks damaged in 37 hours | Blocks damaged in 37 hours | Blocks damaged in 15 min. | Surface contacting the pulley fused in 2 hours |
| Belt characteristics — Noise of belt (dB) at 80℃ | 86.7 | 87.2 | 92.4 | 91.1 |

0240936

- 30 -

Physical properties of the above phenol resin plastic material were measured by the method shown below.

(1) <u>Impact strength, flexural strength and coefficient of flexural elasticity</u>

JIS K6911

The impact strength means the Izod with notch impact strength. Tast pieces notched by a metal mold at molding were used. Flexural strength and coefficient of flexural elasticity were measured under the condition of the distance between fulcrums 64mm and the load speed 2mm/mm, using a 10mm square bar.

(2) <u>Coefficient of friction</u>

Suzuki type thrust friction

Opposite materials       SS41

Surface pressure       20Kg/cm²

Sliding speed       1 cm/sec. -

Regarding the endurance test, transmitting ability test and noise test of the V belt, tests were carried out according to the following specification of V belt and testing conditions.

(1) <u>Measurement of V belt</u>

Thickness of block (4.8mm) Fitting pitch     (5.0mm) Upper width     (45mm)     Angle   26° Circumferential length of V belt    750mm(150 blocks) The block has a reinforcing member (made of 2mm thick aluminum alloy) of insert molding.

(2) Testing method

The transmitting ability test of V belt

As shown in Fig. 3, a test belt 23 was wound round between a driving pulley 21 (pitch diameter 70mm) and a driven pulley 22 (pitch diameter 160mm) and the rate of slip was measured by changing a transmitting torque at 2,500r.p.m. of the driving pulley and at 250 Kg axial load. From the transmitting torque when the rate of slip was 2%, ST value was obtained by the following formula and such ST value was regarded as transmitting ability.

$$ST = T/r \cdot r$$

T : Transmitting torque when the rate of slip is 2%.

r : Effective radius (m)

θ : Belt winding angle (radian)

Endurance test of V belt

According to the pulley layout adopted for the tarnsmitting ability test, the test was carried out under the conditions of number of revolutions of driving pulley 2,500rpm, axial load 250 kg, input torque 4.5 kg·m (A condition) and number of revolutions of driving pulley 2,500rpm, axial load 365 kg, input torque 7.8 kg·m (B condition) and environmental temperature at belt running 90℃.

Noise test of V belt

According to the layout adopted for the transmitting ability test, the belt was run under the conditions of the number of revolutions of driving pulley 1,000rpm, axial load 100 kg and no load. The total noise level was measured by a noisemeter 24 at the fixed position ($L_1$ = 50mm, $L_2$ = 100mm).

(3) Test results

In Comparative Example 1, denatured phenol resin of Example 1 was replaced with novolak type phenol resin (non-denatured phenol resin). As compared with Exmple 1, Comparative Example 1 is low both in impact strength and flexural strength and during the running for 37 hours, blocks were chipped.

In Comparative Example 2, the quantity of rubber was reduced to zero% as against Example 4 and during the running for 65 hours, blocks were chipped due to low impact strength.

In Comparative Example 3, novolak type phenol resin was reinforced with glass fiber. Although Comparative Example 3 showed a very high flexural strength, blocks were broken in only 15 minutes' running due to small impact strength. It also showed a high noise level due to large coefficient of friction, large specific gravity and high coefficient of elasticity.

In Comparative Example 4, thermoplastic resin reinforced with glass fiber was used. Resin fused at the surface contacting the pulley due to frictinal heat generated between the block and the pulley. Similarly to Comparative Example 3, Comparative Example

0240936

4 was high in the noise level.

On the other hand, belts in Examples 1 - 11 showed no damage on blocks even during the running for 100 hours.

In Example 2, denatured phenol resin was used jointly with novolak type phenol resin and C-NBR was used as rubber ingredient. Thanks to good compatibility of C-NBR, Example 2 showed almost the same physical property as Example 1.

In Example 3, both non-denatured novolak type phenol resin and C-NBR were used. Example 3 showed almost the same physical property as Example 1 and Example 2. Although Comparative Example 1 uses both non-denatured vonolak type phenol resin and NBR, it is inferior to Example 3 in performance. This is attributed to that Example 3 uses phenol resin and C-NBR which has high compatibility.

In Examples 4, 5, the quantity of rubber was changed in relation to Example 1 and big change in compact strength is observed.

In Examples 6 - 9, a friction regulating agent is compounded. While molybdeum disufide and graphite powder show only small noise reducing effect, fluoric resin powder imparts a large noise reducing effect with only small quantity of compounding. Although addition of fluoric resin powder tends to reduce the transmitting ability to some extent, such reduction is more than offset by the large noise reducing effect of fluoric resin powder.

In Example 10, glass chop and vinylon chop are used jointly as fibrous base material. Example 10 shows high strength at high temperatures and high transmitting ability of belt.

In Example 11, aramid fiber and rayon are used jointly. As compared with Example 9 which uses aramid fiber, Example 11 shows some degradation of physical property but has good performance.

In Examples 12, 13, keblah 49 which is aramid fiber and Technora are reinforced with glass fiber. Against Examples 1 - 11, Examples 12, 13 have good mechanical property and show a long durable time under Conditions B which are severer than the Endurance Test Condition A. Among various aramid fibers, Technora shows larger effect of imparting impact-resistance.

In Example 14, Technora is used singly. Similarly to Examples 9 and 13, Example 14 shows high impact strength.

As explained above, phenol resin plastic material under the present invention has high impact strength and high flexural strength, withstands repeated impact and has high heat-resistance. Thus, it has reciprocal characteristics in combination and is well-blanced in physical property. The V belt according to the present invention, using blocks formed with such material, involves neither fusing of the surface of blokcs at high-temperatrure and high-speed running nor damage of blocks due to impact at V belt running. Indeed, the V belt according to the present invention withstands high-speed, high temperature and high load, proving to be a V belt of long usable life.

The V belt according to the present invention has made it possible to eliminate damage on the surface of blocks contacting the pulley and also to reduce a noise by using a friction regulating agent.

In the above embodiment, blocks 4 and load carriers 2, 3 are engaged with each other in a lengthwise direction of the V belt by engagement of convexed parts of blocks 4 with concaved parts of load carriers 2, 3. On the contrary, engagement of blocks with load carriers can be made by forming concaved parts on the block side and convexed parts on the load carrier side. No particular limitation is made on the method of engaging blocks with load carriers, for example, a chemical fixing means using adhesives may be employed.

The above embodiment applies to the V belt which obtains the friction transmitting force with the variable-speed pulley at the side surface of the block and at the side surface of the load carrier but is applicable to the V belt which obtains the friction transmitting abilitiy only at the side surfaces (a part or the whole) of the blocks and also applicable to such type of V belt having only one load carrier.

As the present invention can be embodied in various characteristics, the above embodiment has been given solely for explanation puroposes and is not of restrictive nature. Furthermore, as the scope of the present invention is not limited by the description made preceding the claim but is limited by the scope of claime for patent, any change in the requirements of the scope of claim for patent and equivalents to such requirements are included in the scope of claim for patent.

CLAIMS

1. A V belt characterized in that it is composed by endless load carriers and a plurality of blocks engaged with said load carriers at a substantially regular pitch in a lengthwise direction of V belt, said blocks being formed with hard reisin material at least at the surface which makes contact with a pulley and said hard resin marterial being mixed with organic reinforcing fiber and containing a friction regulating agent.

2. A V belt as defined in Claim 1, wherein resin base of the hard resin material is phenol resin.

3. A V belt-as defined in Claim 2, wherein resin base of the hard resin material is a mixture of phenol resin and NBR.

4. A V belt as defined in Claim 1, Claim 2 or Claim 3, wherein organic reinforcing fiber has at least aramid fiber.

5. A V belt as defined in Claim 1, Claim 2, Claim 3 or Claim 4, wherein the friction regulating agent is polytetrafluoroethylene powder.

6. A V belt as defined in Claim 5, wherein the friction regulating agent is mixed in at the ratio of 100 weight parts of resin base to 1 - 10 weight parts of it.

7. A V belt characterized in that it is composed of endless load carriers and a plurality of blocks provided in relation to said load carriers at a substantially regular pitch in a lengthwise direction of a V belt, said blocks being formed at least at the surface which makes contact with a pulley with phenol resin plastic material containing 100 weight parts of matrix comprising 100 weight parts of phenol resin and 3 - 70 weight parts of rubber ingredient and 10 - 125 weight parts of fibrous base material having tensile strength of more than 6g/denier and strength of more than 12g.

8. A V belt as defined in Claim 7, wherein the phenol resin is a phenel resin denatured with at least one kind of compound selected from among 10 - 100 weight parts of cardol, anacardic acid and cardanol to 100 weight part of phenol group.

9. A V belt as defined in Claim 7 or Claim 8, wherein the phenol resin plastic material contains a friction regulating agent.

10. A V belt as defined in Claim 7 or Claim 8, wherein the rubber ingredient is chloroprene rubber, acrylonitrilebutadiene rubber or carboxyl denatured acrylonitrilebutadiene rubber.

11. A V belt as defined in Claim 7, Claim 8 or Claim 9, wherein organic fibers, such as polyvinyl alcohol fiber, polyamide fider, cellulosic fiber, polyester fiber, aramid fiber, etc., are used singly or in mixture of at least two kinds as the fibrous base material.

12. A V belt as defined in Claim 7, Claim 8 or Claim 9, wherein the fibrous base material comprises the combination of organic fiber and inorganic fiber, such as carbon fiber, glass fiber, metallic fiber, mineral fiber, etc., and the rate of said inorganic fiber is less than 70 weight parts in total fiber.

13. A V belt as defined in Claim 9, wherein the friction regulating agent is fluoric resin and is contained in total phenolic resin plastic

0240936

material at 1 - 15 weight parts.

14. A V belt as defined in any one of Claims 1, 2, 3, 4, 6, and 7, wherein aromatic polyamide fiber which is polyparaphenylene·3, 4' diphenylether·terephtharamid is used singly or in mixture with other organic fiber or inorganic fiber as the fibrous base material.

# FIG.1

# FIG.2

# FIG.3

# FIG.4

# FIG.5 (a)

SOUND PRESSURE LEVEL

BELT TEMPERATURE 35℃
TOTAL NOISE 87.0dB

FREQUENCY

AMPLITUDE

TIME

# FIG.5 (b)

SOUND PRESSURE LEVEL

BELT TEMPERATURE 80℃
TOTAL NOISE 89.0dB

FREQUENCY

AMPLITUDE

TIME

4/5    0240936

FIG.6 (a)

AMPLITUDE   SOUND PRESSURE LEVEL

BELT TEMPERATURE 35℃
TOTAL NOISE 80.5dB

FREQUENCY

TIME

FIG.6 (b)

AMPLITUDE   SOUND PRESSURE LEVEL

BELT TEMPERATURE 80℃
TOTAL NOISE 87.8dB

FREQUENCY

TIME

# FIG.7 (a)

AMPLITUDE   SOUND PRESSURE LEVEL

BELT TEMPERATURE 35℃
TOTAL NOISE 78.3dB

FREQUENCY

TIME

# FIG.7 (b)

AMPLITUDE   SOUND PRESSURE LEVEL

BELT TEMPERATURE 80℃
TOTAL NOISE 78.7dB

FREQUENCY

TIME